# FASCICULE DE BREVET EUROPEEN

(11) **EP 0 494 295 B1**
(45) Date de publication et mention de la délivrance du brevet: **12.04.1995**
(21) Numéro de dépôt: 91914114.3
(22) Date de dépôt: 25.07.1991
(51) Int. Cl.: A01G 27/00

(54) **DISPOSITIF DE DETERMINATION DE LA QUANTITE D'EAU NECESSAIRE A UN SUBSTRAT DE CULTURE ET BAC DE CULTURE ADAPTE A LA MISE EN OEUVRE DU DISPOSITIF**
VORRICHTUNG ZUR BESTIMMUNG DER FÜR EIN KULTURSUBSTRAT BENÜTIGTEN WASSERMENGE UND KULTURBEHALTER FÜR DESSEN ANWENDUNG
DEVICE FOR DETERMINING THE QUANTITY OF WATER REQUIRED BY A CULTURE SUBSTRATE, AND CULTURE BOX ADAPTED FOR IMPLEMENTING SUCH DEVICE

(30) Priorité: 26.07.1990 FR 9009802
(43) Date de publication de la demande: 15.07.1992
(73) Titulaire: CHAMOULAUD, Michel, 33700 Mérignac (FR)
(72) Inventeur: CHAMOULAUD, Michel, 33700 Mérignac (FR)
(74) Mandataire: Thévenet, Jean-Bruno
(86) Numéro de dépôt international: FR9100615
(87) Numéro de publication internationale: WO9201365

(56) Documents cités:
- DE-A- 2 709 793
- FR-A- 2 372 433
- FR-A- 2 460 103
- FR-A- 2 614 417
- US-A- 3 438 383

## Description

La présente invention concerne un dispositif permettant de déterminer, par une lecture directe, la quantité d'eau nécessaire à la maintenance d'une bonne hygrométrie dans un substrat de culture placé dans un bac.

L'invention concerne également un bac de culture spécialement adapté à la mise en oeuvre du dispositif de détermination de la quantité d'eau nécessaire à un substrat de culture placé dans le bac.

Dans l'art antérieur, les fréquences d'arrosage et la quantité d'eau à apporter à un substrat, ne sont pas évidentes. Seul un spécialiste peut par l'aspect et par le toucher du substrat en déterminer les besoins.

Il existe des pots à réserves d'eau qui disposent d'un dispositif pour visualiser le niveau d'eau dans le bas. Le principal inconvénient de ce type de bac est le temps nécessaire à l'acclimatation de la plante. Il faut en moyenne deux mois pour que les racines puissent venir puiser l'eau dans le fond du bac. Un arrosage traditionnel par le dessus est indispensable pendant cette période.

Il existe par ailleurs des appareils de divers types dont le fonctionnement est basé sur une détection du degré hygrométrique de la terre. Ces appareils sont complexes, et ne sont pas utilisables pour un usage domestique. Leur coût est élevé, dû à la conception perfectionnée de ce type d'appareils, et les destine essentiellement aux cultures industrielles.

On connait encore des procédés et dispositifs procédant par pesée tels que ceux décrits dans le document de brevet français N° 2614417, dont le bon fonctionnement demande une bonne résistance des composants, entraînant un coût difficilement compatible avec un usage domestique généralisé. De plus, un tarage est nécessaire, celui-ci devant tenir compte des pourcentages de rétention d'eau du substrat utilisé pour la culture. Un tel tarage nécessite des connaissances que seul l'homme de l'art détient.

L'invention vise à permettre d'indiquer d'une manière fiable les quantités d'eau nécessaires à apporter dans un bac de culture, pour maintenir une bonne végétation, en utilisant un dispositif simple, peu coûteux et d'utilisation commode.

La présente invention a également pour but de permettre la commercialisation de végétaux, notamment de plantes aromatiques et de fleurs en végétation, et concerne des bacs de culture adaptés à une manipulation industrialisée et aux exigences de la distribution en libre-service et spécialement adaptés à la mise en oeuvre de dispositifs de visualisation des besoins d'arrosage conformes à l'invention.

Ces buts sont atteints grâce à un dispositif de détermination de la quantité d'eau nécessaire à un substrat de culture placé dans un bac, qui se caractérise par les éléments suivants :
a) le dispositif comprend une roue de mesure disposée verticalement et montée sur une cloison verticale de façon à pouvoir tourner librement autour d'un axe horizontal, tout en présentant un balourd,
b) la partie inférieure de la roue de mesure est est adaptée pour être située à quelques millimètres du fond du réservoir du bac,
c) la roue de mesure comprend une première partie peu hydrophile dont la densité moyenne est inférieure à 1 et une deuxième partie munie de moyens hydrophiles qui provoquent une modification du balourd de la roue en fonction de la quantité d'eau retenue dans les moyens hydrophiles.
d) le dispositif comprend des moyens de visualisation de la position angulaire de la roue de mesure.

Selon un premier mode de réalisation possible, le balourd de la roue de mesure est créé par un excentrement (e) de l'axe horizontal par rapport à l'axe géométrique de la roue de mesure.

Selon un deuxième mode de réalisation, qui peut d'ailleurs également se combiner avec le premier mode de réalisation, le balourd de la roue de mesure est créé par une masse supplémentaire rapportée sur une zone périphérique localisée de la roue de mesure.

Selon un mode de réalisation particulièrement avantageux par sa simplicité de réalisation, ladite première partie peu hydrophile est constituée en une matière légère dont la masse volumique est inférieure à celle de l'eau et présente la forme d'un disque dans lequel est formée une encoche, et ladite deuxième partie comprend un élément hydrophile constitué par une matière spongieuse telle qu'une mousse de polyuréthane rapportée par collage dans ladite encoche.

La deuxième partie hydrophile peut s'étendre selon un secteur angulaire avantageusement compris entre 30° et 90°.

Selon une variante de réalisation, la roue de mesure présente une forme extérieure non entièrement circulaire qui définit un balancier possédant une première position angulaire stable à sec et des positions angulaires différentes de la première position provoquées par une modification du centre de gravité de la roue de mesure lorsque lesdits moyens hydrophiles sont humides.

Dans ce cas, de manière avantageuse, ladite première partie peu hydrophile est constituée sous la forme d'une plaque en une matière légère dont la masse volumique est inférieure à celle de l'eau, et ladite deuxième partie comprend un élément hydrophile constitué par une matière spongieuse rapportée sur une partie de la périphérie de ladite plaque, selon un secteur angulaire compris entre environ 45° et 100° par rapport à l'axe de rotation de la roue de mesure.

Selon une caractéristique particulière, la roue de mesure en forme de balancier vient sélectivement cacher, dans sa position angulaire, des indications, repères ou pictogrammes formés sur la cloison de support de la roue de mesure.

La deuxième partie peut présenter une couleur distincte de celle de ladite première partie pour définir lesdits moyens de visualisation de la position angulaire de la roue de mesure.

La deuxième partie peut être disposée au moins partiellement au voisinage de la partie supérieure de la roue de mesure en l'absence d'eau dans le réservoir du bac et être maintenue en position basse en présence d'eau.

Selon un autre mode de réalisation possible, ladite première partie peu hydrophile est constituée par un carter étanche à l'eau, en forme de portion de disque, pouvant contenir un garnissage en une matière légère, de telle sorte que la densité moyenne de ladite première partie reste inférieure à 1.

Selon une caractéristique particulière de l'invention, ladite deuxième partie comprend au moins quelques grains d'un élément rétenteur d'eau dont le volume augmente fortement en présence d'eau.

L'invention concerne encore un bac de culture adapté à la mise en oeuvre d'un dispositif de détermination de la quantité d'eau nécessaire à un substrat de culture, caractérisé en ce qu'il comprend un compartiment principal pour recevoir le substrat de culture et les plantes à cultiver et un compartiment annexe séparé du compartiment principal par une cloison verticale dont la partie inférieure permet le passage d'eau et qui supporte une roue de mesure disposée verticalement dans le compartiment annexe, la roue de mesure étant montée sur ladite cloison verticale de façon à pouvoir tourner librement autour d'un axe horizontal tout en présentant un balourd, la partie inférieure de la roue de mesure étant située à quelques millimètres du fond du réservoir du bac, la roue de mesure comprenant une première partie peu hydrophile dont la densité moyenne est inférieure à 1 et une deuxième partie munie de moyens hydrophiles qui provoquant une modification du balourd de la roue en fonction de la quantité d'eau retenue dans les moyens hydrophiles et la roue de mesure ou le compartiment annexe étant équipés de moyens de visualisation de la position angulaire de la roue de mesure.

Selon l'invention, la détermination et la visualisation de la quantité d'eau d'arrosage nécessaire aux plantes présentes dans le bac de culture est ainsi effectuée simplement grâce à la partie hydrophile de la roue de mesure. La dessication de cette partie hydrophile qui est placée dans les mêmes conditions atmosphériques que le substrat et présente une vitesse d'évaporation qui évolue en parallèle avec celle du substrat, modifie le balourd de la roue de mesure et provoque une mise en rotation de celle-ci qui permet, par exemple, grâce à des repères ou signes portés sur la périphérie de la roue de mesure,ou à des repères ou signes formés sur la cloison de support de la roue de mesure et sélectivement cachés ou découverts par la roue de mesure, de suivre avec précision et facilité l'évolution de la quantité d'eau à ajouter pour atteindre le degré hygrométrique idéal des cultures, et de procéder à temps au réapprovisionnement en eau d'arrosage sans apporter d'excès d'eau.

D'autres caractéristiques et avantages de l'invention ressortiront de la description suivante de modes particuliers de réalisation, donnés à titre d'exemples non limitatifs en référence aux dessins annexés, sur lesquels :
- la figure 1 est une vue en perspective d'un bac de culture selon l'invention, équipé d'un dispositif de détermination de quantité d'eau selon un premier mode de réalisation de l'invention,
- les figures 2 et 3 sont des vues selon la flèche F de la figure 1, le corps du bac de culture étant ôté, qui montrent un dispositif de détermination de quantité d'eau selon un premier mode de réalisation, respectivement en position de manque d'eau et en position de saturation en eau,
- les figures 4 et 5 sont des vues schématiques en coupe respectivement selon la ligne IV-IV de la figure 5 et selon la ligne V-V de la figure 4, montrant un bac de culture selon l'invention équipé d'un dispositif de détermination de quantité d'eau selon un second mode de réalisation de l'invention,
- les figures 6 à 8 montrent des vues de face d'une roue de mesure selon la mode de réalisation des figure 4 et 5 respectivement en position de manque total d'eau, en position de manque partiel d'eau et en position de saturation en eau, et
- les figures 9 et 10 sont des vues analogues à celles des figures 2 et 3 montrant une variante de réalisation du dispositif de détermination de quantité d'eau respectivement en position de manque d'eau et en position de saturation en eau.

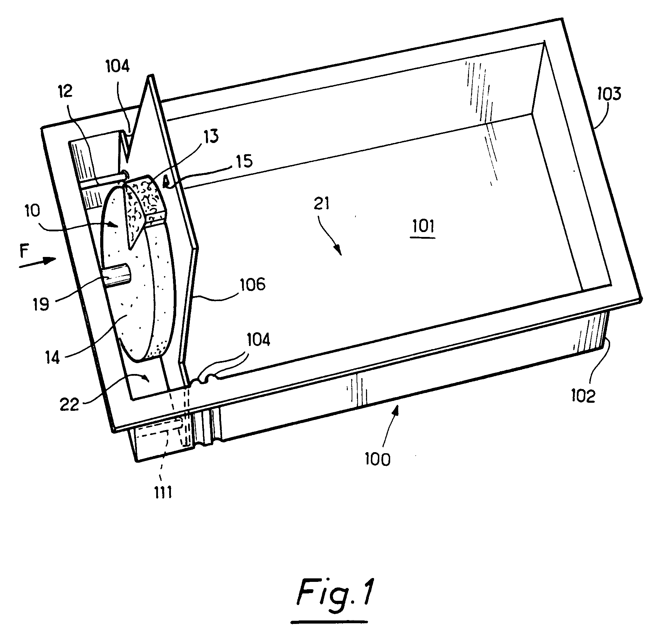

Si l'on se réfère tout d'abord à la figure 1, on voit un bac de culture 100, qui peut être réalisé en matière plastique et destiné à être jetable après usage ou au contraire réutilisable. Le bac 100 présente un fond 101, des parois latérales 102 et un rebord horizontal supérieur 103.

Une cloison 106, de préférence amovible, qui peut également être en matière plastique, divise l'espace interne du bac 100 en un premier compartiment 21 destiné à recevoir un substrat de culture de plantes ou fleurs, et un second compartiment 22, de taille plus réduite, destiné à recevoir un dispositif de détermination de la quantité d'eau nécessaire au substrat de culture placé dans le compartiment principal 21.

La cloison 106 peut par exemple être maintenue en position à l'aide de nervures verticales 104 formées dans les parois latérales du bac 100. Le cloison 106 peut aussi porter des pions 111, 112 sur sa face avant, et être maintenue entre d'une part des nervures 104 formées sur des parois verticales 102 perpendiculaires à la cloison 106 et d'autre part la paroi verticale du bac 100 parallèle à la cloison 106, qui délimite le compartiment 22, les pions 111, 112 jouent alors le rôle d'entretoises. Le cloison 106 comporte de préférence une partie 108 qui s'étend eu-delà du rebord supérieur 103 du bac et empêche que les plantes viennent porter contre le dispositif de mesure de quantité d'eau.

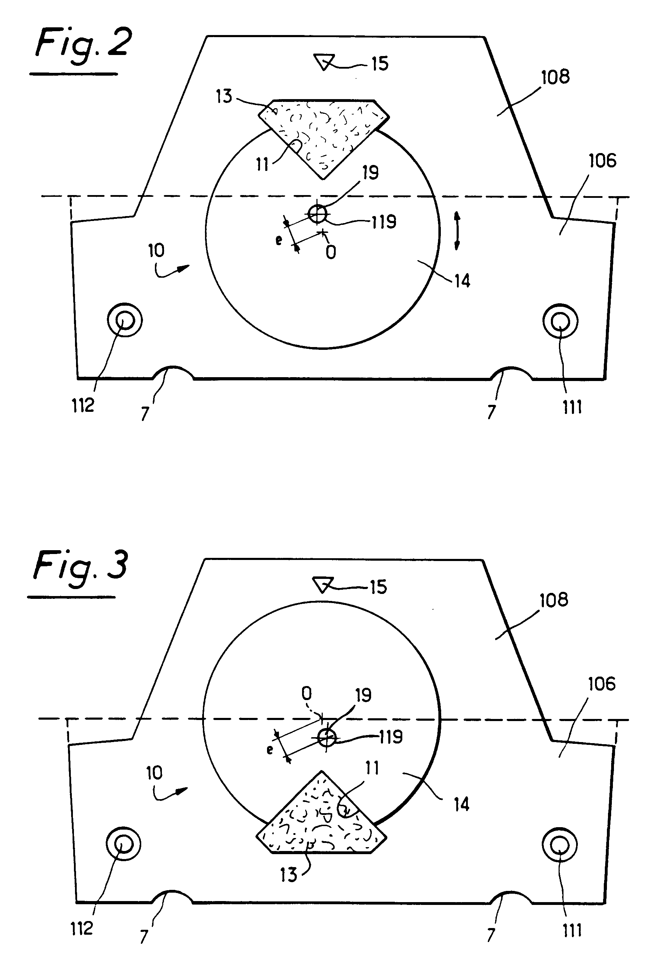

Le cloison 106 ne doit pas être entièrement étanche à l'eau et peut comprendre par exemple des ouvertures ou encoches 7 eu voisinage de son arête inférieure (figures 2 et 3). Le cloison 106 peut aussi reposer sur des nervures formées perpendiculairement à la cloison 106 dans le fond du bac 100.

On décrire maintenant en référence aux figures 1 à 3 un premier exemple de dispositif de détermination de la quantité d'eau d'arrosage nécessaire au maintien d'une bonne hygrométrie dans le substrat placé dans le compartiment principal 21 du bac 100.

Le dispositif de détermination de quantité d'eau d'arrosage selon l'invention comprend essentiellement une roue de mesure 10 qui est montée verticalement de façon à pouvoir tourner librement autour d'un axe horizontal 19 fixé sur le cloison verticale 106. Le cas échéant, la position en hauteur de l'axe 19 peut être réglable.

La roue de mesure 10 est positionnée à l'intérieur du compartiment 22 du bac de culture 100 de telle sorte que le partie inférieure de le roue de mesure 10 se trouve à une distance de l'ordre de quelques millimètres du fond du réservoir du bac. La roue de mesure 10 est réalisée de manière à présenter un balourd à sec et se placer à sec dans une position angulaire prédéterminée, telle que celle représentée sur les figures 1 et 2.

La roue de mesure 10 est essentiellement constituée d'une première partie peu hydrophile 14 dont le masse volumique moyenne est inférieure à celle de l'eau, c'est-à-dire de densité inférieure à 1, et une deuxième partie 13 qui comprend essentiellement des moyens hydrophiles de manière à faire varier le balourd de la roue de mesure 10 en fonction de le quantité d'eau retenue dans les moyens hydrophiles.

De façon plus particulière, dans le mode de réalisation des figures 1 à 3, la première partie 14 est constituée par un disque formé d'une seule pièce dans une matière plus légère que l'eau et peu hydrophile telle que par exemple du liège, du polystyrène expansé, ou un matériau alvéolaire, tel que par exemple de le mousse de polyuréthane à cellules fermées. Cette première partie 14 en forme de disque est percée d'un orifice 119 pour le passage de l'axe horizontal de support 19. Par ailleurs, une encoche 11 est formée sur une portion de la périphérie du disque 14 pour permettre l'insertion de moyens hydrophiles 13 qui, dans le mode de réalisation le plus simple, peuvent être constitués par un simple morceau de matière spongieuse collé dans l'encoche 11.

Une petite masselotte peut être rapportée sur la partie peu hydrophile 14 en forme de disque, du côté diamétralement opposé à l'encoche 11 par rapport à l'axe 19 pour maintenir à sec le roue de mesure 10 dans le position de la figure 1, c'est-à-dire avec le matière hydrophile sèche 13 placée en position haute. Un ou plusieurs repères 15 peuvent être inscrits sur le cloison 106 pour repérer le position angulaire de le roue de mesure 10. La partie 13 formée d'une matière spongieuse telle que par exemple de la mousse de polyuréthane à cellules ouvertes peut elle-même présenter une- couleur ou un aspect différent du corps du disque 14 pour faciliter le repérage de la position angulaire de la roue de mesure par rapport aux repères fixes 15.

A titre de variante, et afin d'éviter l'utilisation de masselottes, on peut comme cela est représenté sur les figures 2 et 3 monter le roue de mesure 10 de façon excentrée.

L'orifice 119 du disque 14 traversé par l'axe horizontal 19 peut ainsi présenter un excentrement e par rapport à l'axe géométrique 0 du disque 14, ce qui assure dans la position de la figure 2 pour laquelle le matière hydrophile 13 est sèche, un positionnement de le roue 10 avec la matière hydrophile 13 placée en position haute. Lorsque de l'eau d'arrosage est introduite dans le bac de culture, le disque 14 en matière légère va avoir tendance à flotter dans l'eau présente dans le fond du compartiment 22 et va atténuer le balourd provoquant une rotation de le roue de mesure 10 qui va amener la matière hydrophile 13 au contact de l'eau. Cette matière hydrophile 13 imbibée d'eau va par l'accroissement de son poids maintenir le roue de mesure dans la position de la figure 3, c'est-à-dire le matière hydrophile 13 placée en bas, pendant tout le temps où il y a saturation en eau. Lors de l'évaporation de l'eau et du séchage progressif du moyen hydrophile 13, qui correspond au séchage du substrat de culture, le moyen hydrophile 13 va présenter une messe en diminution, de sorte que la roue de mesure va progressivement revenir à la position de la figure 2, signalant le besoin de complément en eau d'arrosage.

Le moyen hydrophile 13 peut être adapté à la nature du substrat et des plantes contenus dans le compartiment principal 21 du bac de culture. En particulier, le volume de la matière spongieuse constituant le moyen hydrophile 13 peut être adapté à différentes conditions d'utilisation.

Le moyen hydrophile 13 peut par ailleurs comporter un ou plusieurs grains d'une matière formant rétenteur d'eau, qui peut être par exemple un polymère tel que la polyacrilamide ou un produit issu de la culture d'une bactérie de la famille des polysaccharides, ce rétenteur d'eau présentant la propriété d'augmenter fortement de poids et de volume en présence d'humidité, le phénomène étant réversible.

On notera que le dispositif de mesure illustré sur les figures 1 à 3 peut être réalisé de façon extrèmement simple et peu coûteuse. Ainsi, un cylindre d'un matériau léger peu hydrophile tel que du liège, ou du polystyrène expansé par exemple peut être facilement perforé pour constituer un canal formant un orifice 119, puis partiellement découpé pour former une encoche longitudinale 11. Une matière spongieuse avec le cas échéant une faible quantité de rétenteur d'eau peut être rapportée par collage dans l'encoche longitudinale pour constituer la matière hydrophile 13. L'ensemble formé est ensuite simplement débité en tranches pour former une série de roues de mesure 10 telles que celles représentées sur les figures 1 à 3.

Les cloisons 106 peuvent également être facilement réalisées en série en matière plastique, en étant munies le cas échéant d'encoches ou ouvertures 7 à leur partie inférieure. Des tétons en matière plastique 19,111,112 peuvent être rapportés par exemple par collage sur chaque cloison pour constituer l'axe 19 du support de la roue de mesure 10 et des entretoises de positionnement de la cloison 106 dans le bac de culture 100.

L'ensemble du bac de culture 100 équipé de son dispositif de mesure peut être prévu pour être jeté après usage, compte tenu de son faible coût, mais pourrait aussi être réutilisé puisqu'il constitue un ensemble relativement robuste.

Diverses variantes de réalisation sont possibles.

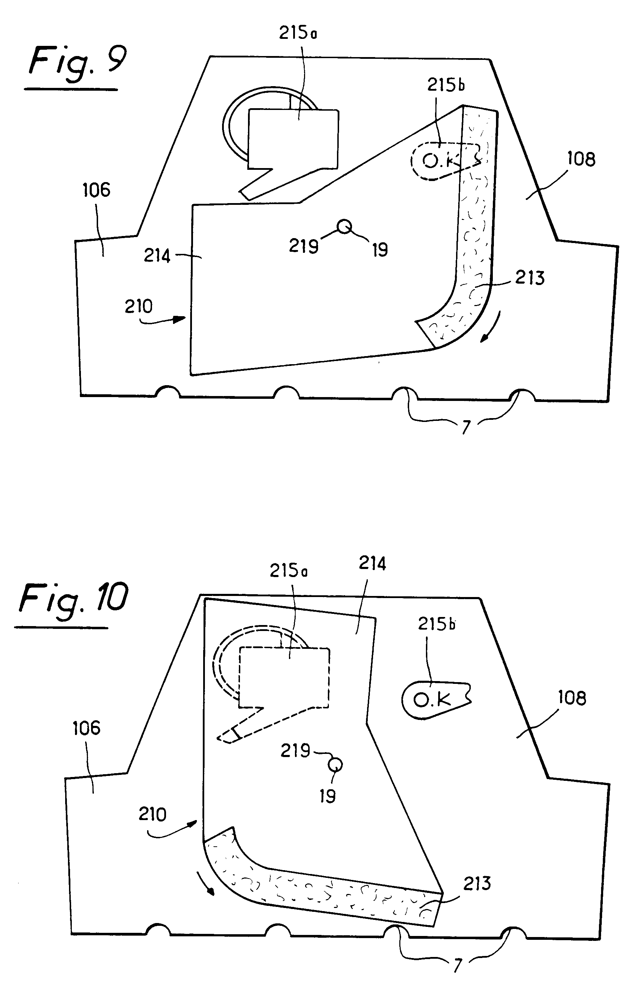

Ainsi, on a représenté sur les figures 9 et 10 une roue de mesure 210 qui présente une forme extérieure non entièrement circulaire afin de définir un balancier, par exemple en forme de bottillon. Dans ce cas, la roue de mesure 210 présente toujours un balourd à sec, c'est-à-dire est suspendue par un axe horizontal 19 placé dans un orifice 219 qui ne coïncide pas avec le centre de gravité de la roue de mesure, de façon à définir une première position angulaire stable (fig. 9). Cette première position angulaire correspond à un manque d'eau et fait donc apparaître une indication en ce sens. Cette indication peut être constituée par l'arrivée en position haute au moins d'une partie du moyen hydrophile 213 qui peut présenter une couleur distinctive, ou par un repère porté sur la tranche de la roue de mesure ou encore par un signe repère ou pictogramme 215a formé sur la partie supérieure 108 de la cloison 106 et découvert par la roue de mesure 210 dans sa position à sec. Sur la figure 9 on voit ainsi le dessin 215a d'un arrosoir signifiant le besoin d'eau d'arrosage pour les plantes.

Le moyen hydrophile 213, lorsqu'il est imbibé d'eau, augmente de poids et provoque le basculement de la roue 210 en forme de balancier pour amener celle-ci dans la position de la figure 10 lorsqu'il y a saturation en eau.

Dans la position de la figure 10, le moyen hydrophile 213 est placé tout-à-fait en position basse et l'indication 215a de besoin en eau est cachée par la partie légère peu hydrophile 214 de la roue 210 tandis qu'une autre indication 215b, telle qu'une mention "OK" peut signaler que la réserve d'eau est suffisante. Naturellement, diverses positions intermédiaires sont possibles entre la position des figures 9 et 10 lorsque l'eau est partiellement évaporée sans que le substrat et le moyen hydrophile 213 soient tout-à-fait secs.

La roue de mesure 210 peut être réalisée comme dans le cas du mode de réalisation des figures 2 et 3 par une plaque en matière légère de densité inférieure à 1, qui constitue la partie peu hydrophile 214, et par un élément hydrophile 213 constitué par une matière spongieuse rapportée à la périphérie de la plaque 214.

La matière spongieuse 213 est de préférence disposée selon un secteur angulaire centré sur l'axe de rotation 119, qui peut s'étendre entre environ 45° et 100°. Comme on peut le voir sur les figures 9 et 10, l'élément hydrophile 213 peut se présenter sous la forme d'une semelle placée sous la plaque 214 en forme de bottine. En position de saturation en eau, la matière spongieuse 213 placée au voisinage du fond du bac et imbibée d'eau maintient la roue de mesure en position verticale.

Au contraire, en position sèche, la roue de mesure 210 est ramenée dans la position couchée de la figure 9, du fait de la diminution de poids de la matière spongieuse constituant le moyen hydrophile 213. Ce moyen hydrophile est alors placé à peu près verticalement et lors d'un apport d'eau d'arrosage, même minime, le talon de ce moyen hydrophile 213 en forme de semelle est imbibé par de l'eau qui peut monter par capillarité provoquant une modification de la position de la roue de mesure 210.

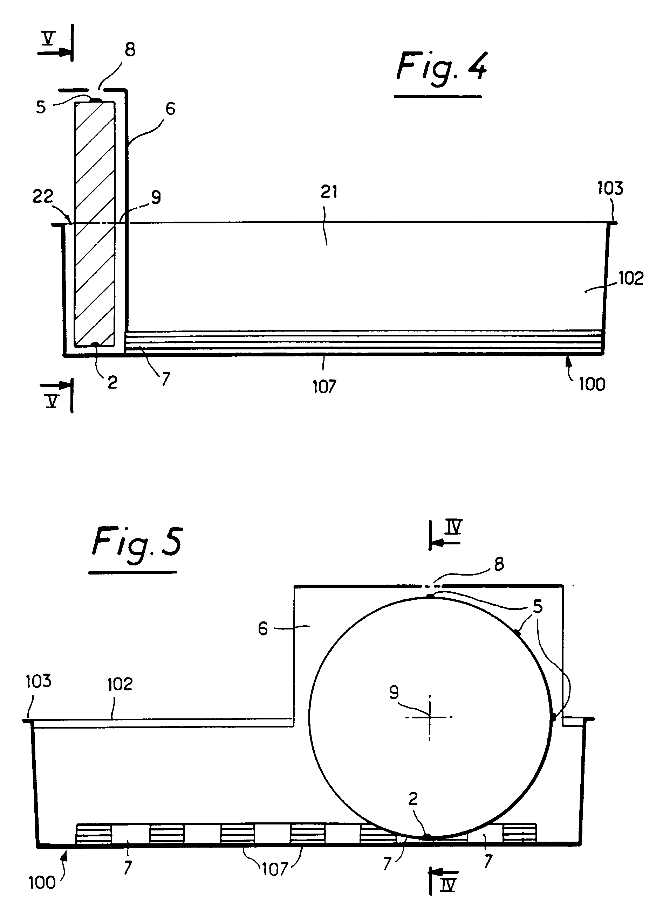

On a représenté sur les figures 4 à 8 une roue de mesure qui est d'un type un peu différent de celui de la roue de mesure 10 des figures 1 à 3 ou de celui de la roue de mesure 210 des figures 9 et 10, bien qu'elle fonctionne selon un principe semblable.

Dans le mode de réalisation des figures 4 à 8, la roue de mesure 1 présente un premier compartiment 4, qui peut représenter en volume entre environ 50 et 75 % de la roue de mesure 1 et constitue un compartiment de densité moyenne inférieure à 1. Ce compartiment 4 peut être vide et étanche à l'eau ou peu être rempli d'un matériau léger et imperméable, c'est-à-dire peu hydrophile.

Une masselotte formant contrepoids peut être disposée de façon localisée dans le fond du compartiment 4 pour créer un balourd.

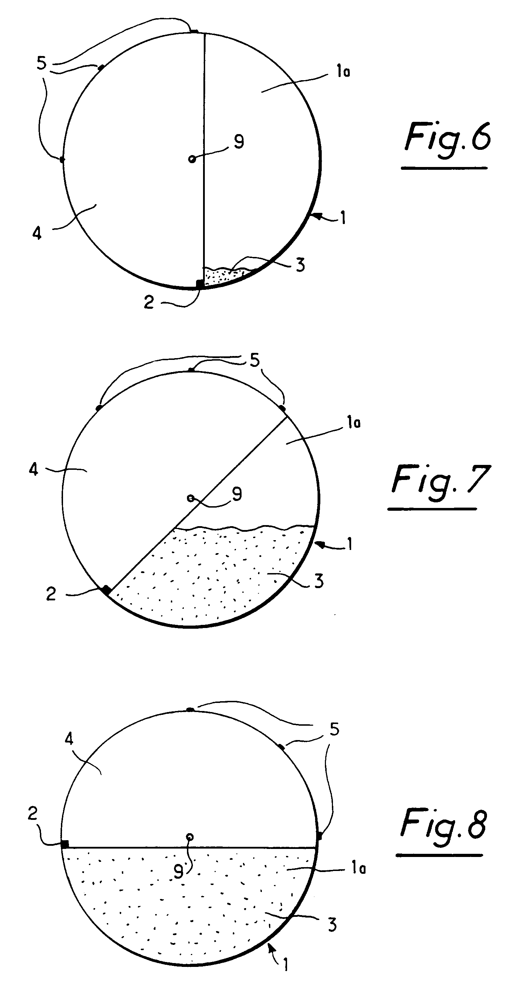

Un deuxième compartiment 1a, qui occupe la volume laissé libre par le premier compartiment 4, constitue un réservoir non étanche à l'eau, dans lequel est placée, par exemple au voisinage de la masselotte 2, une faible quantité d'un produit rétenteur d'eau 3, tels que ceux cités plus haut, qui présente à sec un faible volume et une faible masse, de sorte que la roue de mesure 1 est alors maintenue dans la position de la figure 6, grâce au balourd créé par la masselotte 2. En présence d'humidité, le rétenteur d'eau 3 augmente fortement de volume et de poids et tend à occuper une partie de plus en plus importante du compartiment 1a, ou à densifier ce compartiment 1a, de sorte que le balourd de la roue de mesure 1 est modifié et, selon la quantité d'eau présente, la roue de mesure 1 est entraînée en rotation autour de son axe 9 fixé sur une cloison 6 d'un bac de culture 100 pouvant être analogue à celui décrit en référence à la figure 1.

Des moyens d'indication visuels 5 sont disposés sur la périphérie de la roue de mesure 1 afin de permettre une observation de la position angulaire de la roue 1, qui est fonction de la quantité d'eau prise en compte par le rétenteur d'eau 3.

La figure 8 correspond ainsi à une saturation en eau tandis que la figure 7 correspond à une présence d'eau en quantité limitée et le figure 6 correspond à une absence totale d'humidité.

Lorsque le rétenteur d'eau 3 est sec (figure 6), le poids de la masse 2 maintient le dispositif 1 à une position qui est repérée par l'un des repères 5 à la partie supérieure. Ce repère 5 peut avantageusement être complété par une indication de volume d'eau à apporter au bac.

Au contact de l'eau le rétenteur 3 augmente de poids et de volume et provoque la rotation du dispositif (figures 7 et 8).

L'eau en s'évaporant provoque à son tour une diminution de poids du rétenteur 3 et le retour du dispositif à la position initiale (figure 6).

On voit sur les figures 4 et 5 en représentation schématique, un bac 100 équipé du dispositif pour déterminer la quantité d'eau, selon le mode de réalisation qui vient d'être décrit.

Le bac 100 est équipé de nervures longitudinales 107.

Perpendiculairement aux nervures, une cloison mobile 6 ayant à sa base des ouvertures 7 se termine à sa partie supérieure par un carter pour éviter le contact de la végétation avec la roue mobile 1 du dispositif supportée par l'axe horizontal 9 arrondi sur la cloison 6.

Une ouverture 8 est aménagée dans la partie supérieure du carter, permettent de lire les indications 5 inscrites sur la tranche de la roue mobile 1 du dispositif.

Dans le compartiment 21, l'espace entre les nervures 107 est rempli d'un substrat ayant un coefficient de rétention d'eau élevé (par exemple vermiculite, tourbe).

Le rétenteur d'eau 3 présente des caractéristiques de rétention d'eau semblables à celle du substrat placé dans le compartiment 21 et se trouve placé dans les mêmes conditions atmosphériques, de sorte que la vitesse d'évaporation est semblable et la rotation de la roue de mesure 1, provoquée par l'évolution du balourd généré par la dessication du rétenteur d'eau 3, permet de suivre à l'aide des repères l'évolution de la quantité d'eau à ajouter pour atteindre un degré hygrométrique idéal dans le bac de culture 100, qui est ainsi particulièrement adapté à une utilisation domestique de plantes aromatiques ou décoratives.

## Revendications

1. Dispositif de détermination de la quantité d'eau nécessaire à un substrat de culture placé dans un bac (100), caractérisé en ce qu'il comprend une roue de mesure (1;10) disposée verticalement et montée sur une cloison verticale (6;106) de façon à pouvoir tourner librement autour d'un axe horizontal (9;19), tout en présentent un balourd, la partie inférieure de la roue de mesure (1;10) étant adaptée pour être située à quelques millimètres du fond du réservoir du bac, en ce que le roue de mesure comprend une première partie (4;14) peu hydrophile dont la densité moyenne est inférieure à 1 et une deuxième partie munie de moyens hydrophiles (3;13) qui provoquent une modification du balourd de la roue en fonction de la quantité d'eau retenue dans les moyens hydrophiles (3;13) et en ce que la roue de mesure (1;10) est équipée de moyens de visualisation (5;15) de la position angulaire de la roue de mesure (1;10).

2. Dispositif selon la revendication 1, caractérisé en ce que le balourd de la roue de mesure (10) est créé par un excentrement (e) de l'axe horizontal (19) par rapport à l'axe géométrique (0) de la roue de mesure (10).

3. Dispositif selon les revendications 1 ou 2, caractérisé en ce que le balourd de la roue de mesure (1) est créé par une masse supplémentaire (2) rapportée sur une zone périphérique localisée de la roue de mesure (1).

4. Dispositif selon l'une quelconque des revendications 1 à 3, caractérisé en ce que ladite première partie (14) peu hydrophile est constituée en une matière légère dont le messe volumique est inférieure à celle de l'eau et présente le forme d'un disque dans lequel est formée une encoche (11), et en ce que ladite deuxième partie (13) comprend un élément hydrophile constitué par une matière spongieuse rapportée par collage dans ladite encoche (11).

5. Dispositif selon la revendication 4, caractérisé en ce que ladite deuxième partie (13) s'étend selon un secteur angulaire compris entre environ 30° et 90°.

6. Dispositif selon l'une quelconque des revendications 1 à 3, caractérisé en ce que la roue de mesure (210) présente une forme extérieure non entièrement circulaire qui définit un balancier possédant une première position angulaire stable à sec et des positions angulaires différentes de la première position provoquées par une modification du centre de gravité de la roue de mesure (210) lorsque lesdits moyens hydrophiles (213) sont humides.

7. Dispositif selon la revendication 6, caractérisé en ce que ladite première partie (214) peu hydrophile est constituée sous le forme d'une plaque en une matière légère dont la masse volumique est inférieure à celle de l'eau, et en ce que ladite deuxième partie (213) comprend un élément hydrophile constitué par une matière spongieuse rapportée sur une partie de la periphérie de ladite plaque (214), selon un secteur angulaire compris entre environ 45° et 100° par rapport à l'axe de rotation (19) de la roue de mesure (210).

8. Dispositif selon la revendication 6 et la revendication 7, caractérisé en ce que la roue de mesure (210) en forme de balancier vient sélectivement cacher, selon sa position angulaire, des indications, repères ou pictogrammes (215a, 215b) formés sur la cloison (106) de support de la roue de mesure (210).

9. Dispositif selon l'une quelconque des revendications 4 à 8, caractérisé en ce que ladite deuxième partie (13; 213) présente une couleur distincte de celle de ladite première partie (14; 214) pour définir lesdits moyens de visualisation de la position angulaire de la roue de mesure (10; 210).

10. Dispositif selon l'une quelconque des revendications 1 à 3, caractérisé en ce que ladite première partie (14) peu hydrophile est constituée par un carter étanche à l'eau, en forme de portion de disque, pouvant contenir un garnissage en une matière légère, de telle sorte que la densité moyenne de ladite première partie (14) reste inférieure à 1.

11. Dispositif selon l'une quelconque des revendications 1 à 10, caractérisé en ce que ladite deuxieme partie (3;13) comprend au moins quelques grains d'un élément rétenteur d'eau dont le volume augmente fortement en présence d'eau.

12. Dispositif selon l'une quelconque des revendications 1 à 11, caractérisé en ce que ladite deuxième partie (3;13; 213) est disposée au moins partiellement au voisinage de la partie supérieure de la roue de mesure (1;10; 210) en l'absence d'eau dans le réservoir du bac et être maintenue en position basse en présence d'eau.

13. Dispositif selon l'une quelconque des revendications 1 à 12, caractérisé en ce que la cloison (6;106) de support de la roue de mesure est munie à sa partie inférieure d'orifices ou encoches (7) permettant le passage de l'eau.

14. Bac de culture adapté à la mise en oeuvre d'un dispositif de détermination de la quantité d'eau nécessaire à un substrat de culture, caractérisé en ce qu'il comprend un compartiment principal (21) pour recevoir le substrat de culture et les plantes à cultiver et un compartiment annexe (22) séparé du compartiment principal (21) par une cloison verticale (6;106) dont la partie inférieure permet le passage d'eau et qui supporte une roue de mesure (1;10) disposée verticalement dans le compartiment annexe (22), la roue de mesure étant montée sur ladite cloison verticale de façon à pouvoir tourner librement autour d'un axe horizontal tout en présentant un balourd, la partie inférieure de la roue de mesure (1;10) étant située à quelques millimètres du fond du réservoir du bac, la roue de mesure comprenant une première partie (4;14) peu hydrophile dont la densité moyenne est inférieure à 1 et une deuxième partie munie de moyens hydrophiles (3;13) qui provoquent une modification du balourd de la roue en fonction de la quantité d'eau retenue dans les moyens hydrophiles (3;13) et la roue de mesure (1;10) ou le compartiment annexe (22) étant équipés de moyens de visualisation (5;15) de la position angulaire de la roue de mesure (1;10).

15. Bac de culture selon la revendication 14, caractérisé en ce que la cloison verticale (6;106) est amovible et coopère avec des nervures (104) formées dans les parois du bac.

16. Bac de culture selon l'une quelconque des revendications 14 et 15 , caractérisé en ce qu'il est réalisé en matière plastique.

## Claims

1. Device for determining the quantity of water required by a cultivation medium placed in a tray (100), characterized in that it comprises a measuring wheel (1; 10) disposed vertically and mounted on a vertical partition (6; 106) so as to be free to rotate about a horizontal axis (9; 19), while presenting an unbalance, the bottom portion of the measuring wheel (1; 10) being adapted to be situated a few millimetres from the bottom of the tank of the tray, in that the measuring wheel comprises a first portion (4; 14) which is not very hydrophilic and which has a mean relative density less than 1, and a second portion provided with hydrophilic means (3; 13) which cause a modification of the unbalance of the wheel as a function of the quantity of water retained in the hydrophilic means (3; 13), and in that the measuring wheel (1; 10) is fitted with display means (5; 15) for displaying the angular position of the measuring wheel (1; 10).

2. Device according to claim 1, characterized in that the unbalance of the measuring wheel (10) is created by the horizontal axis (19) being eccentric (e) relative to the geometrical axis (O) of the measuring wheel (10).

3. Device according to claim 1 or 2, characterized in that the unbalance of the measuring wheel (1) is created by an additional mass (2) applied to a localised peripheral region of the measuring wheel (1).

4. Device according to any one of claims 1 to 3, characterized in that said first portion (14) which is not very hydrophilic is made of lightweight material of density less than that of water, and is in the form of a disk in which a notch (11) is formed, and in that said second portion (13) comprises a hydrophilic item constituted by sponge material fixed in said notch (11) by adhesive means.

5. Device according to claim 4, characterized in that said second portion (13) extends over an angular sector lying in the range of about 30° to about 90°.

6. Device according to any one of claims 1 to 3, characterized in that the outside shape of the measuring wheel (210) is not entirely circular, thereby defining a rocker having a first stable angular position when dry and angular positions different from the first position caused by a change in the center of gravity of the measuring wheel (210) when said hydrophilic means (213) are moist.

7. Device according to claim 6, characterized in that said first portion (214) which is not very hydrophilic is constituted in the form of a plate of lightweight material whose density is less than that of water, and in that said second portion (213) comprises a hydrophilic item constituted by sponge material fixed to a portion of the periphery of said plate (214) over an angular sector lying in the range about 45° to about 100° relative to the axis of rotation (19) of the measuring wheel (210).

8. Device according to claim 6 and claim 7, characterized in that the rocker-shaped measuring wheel (210) selectively hides indications, marks, or pictograms (215a, 215b) formed on the partition (106) supporting the measuring wheel (210) depending on its angular position.

9. Device according to any one of claims 4 to 8, characterized in that said second portion (13; 213) has a color different from that of said first portion (14; 214), thereby constituting said display means for displaying the angular position of the measuring wheel (10; 210)

10. Device according to any one of claims 1 to 3, characterized in that said first portion (14) which is not very hydrophilic is constituted by a waterproof compartment in the form of a portion of a disk, able to contain a lining of lightweight material, such that the mean relative density of said first portion (14) remains less than 1.

11. Device according to any one of claims 1 to 10, characterized in that said second portion (3; 13) includes at least a few grains of water-retaining material whose volume increases considerably in the presence of water.

12. Device according to any one of claims 1 to 11, characterized in that said second portion (3; 13; 213) is disposed at least partly in the vicinity of the portion of the measuring wheel (1; 10; 210) which is located at the top in the absence of water in the tank of the tray, and is kept in a low position when water is present.

13. Device according to any one of claims 1 to 12, characterized in that the bottom portion of the partition (6; 106) supporting the measuring wheel is provided with orifices or notches (7) allowing water to pass.

14. Plant tray adapted to implement a device for determining the quantity of water required by a cultivation medium, characterized in that it comprises a main compartment (21) for receiving the cultivation medium and plants to be cultivated, and an auxiliary compartment (22) separated from the main compartment (21) by a vertical partition (6; 106) whose bottom portion allows water to pass therethrough and which supports a measuring wheel (1; 10) disposed vertically in the auxiliary compartment (22), the measuring wheel being mounted on said vertical partition in such manner as to be able to rotate freely about a horizontal axis while nevertheless having an unbalance, the bottom portion of the measuring wheel (1;10) being situated a few millimeters from the bottom of the tank of the tray, the measuring wheel comprising a first portion (4; 14) which is not hydrophilic and which has a mean relative density less than 1, and a second portion provided with hydrophilic means (3; 13) causing the unbalance of the wheel to vary as a function of the quantity of water retained in the hydrophilic means (3; 13), with the measuring wheel (1; 10) or the auxiliary compartment (22) being fitted with display means (5; 15) for displaying the angular position of the measuring wheel (1; 10).

15. Plant tray according to claim 14 characterized in that the vertical partition (6; 106) is removable and co-operates with ribs (104) formed in the walls of the tray.

16. Plant tray according to any one of claims 14 and 15, characterized in that it is made of plastic.

## Patentansprüche

1. Vorrichtung zum Bestimmen der für ein in einem Behälter (100) angeordnetes Kultursubstrat erforderlichen Wassermenge, dadurch gekennzeichnet, daß sie ein vertikal angeordnetes, an einer vertikalen Trennwand (6; 106) frei um eine horizontale Achse (9; 19) mit einer Unwucht drehbeweglich montiertes Meßrad umfaßt, wobei der untere Bereich des Meßrads (1; 10) eingerichtet ist, um in wenigen Millimetern Entfernung vom Boden des Reservoirs des Behälters angeordnet zu werden, daß das Meßrad einen wenig hydrophilen ersten Bereich (4; 14), dessen mittlere Dichte kleiner als 1 ist, und einen zweiten Bereich umfaßt, der mit hydrophilen Mitteln (3; 13) versehen ist, die eine Veränderung der Unwucht des Rades je nach in den hydrophilen Mitteln (3; 13) zurückgehaltener Wasermenge bewirken, und daß das Meßrad (1; 10) mit Anzeigemitteln (5; 15) für die Winkelposition des Meßrads (1; 10) versehen ist.

2. Vorrichtung nach Anspruch 1, dadurch gekennzeichnet, daß die Unwucht des Meßrads (10) durch eine Exzentrizität (e) der horizontalen Achse (19) gegen die geometrische Achse (0) des Meßrads (10) verursacht ist.

3. Vorrichtung nach Anspruch 1 oder 2, dadurch gekennzeichnet, daß die Unwucht des Meßrads (1) durch eine Zusatzmasse (2) verursacht ist, die an einem örtlich begrenzten Umfangsabschnitt des Meßrads (1) angebracht ist.

4. Vorrichtung nach einem der Ansprüche 1 bis 3, dadurch gekennzeichnet, daß der wenig hydrophile erste Bereich (14) aus einem leichten Material besteht, dessen spezifisches Gewicht kleiner als das von Wasser ist, und die Form einer Scheibe mit einer darin gebildeten Kerbe (11) hat, daß der zweite Bereich (13) ein hydrophiles Element umfaßt, der aus einem in der Kerbe (11) durch Kleben angebrachten schwammartigen Material besteht.

5. Vorrichtung nach Anspruch 4, dadurch gekennzeichnet, daß der zweite Bereich (13) sich über einen Winkelsektor von zwischen ca. 30 bis 90° erstreckt.

6. Vorrichtung nach einem der Ansprüche 1 bis 3, dadurch gekennzeichnet, daß das Meßrad (210) eine nicht völlig kreisförmige Außenform hat, die eine Schaukel definiert, die eine in trockenem Zustand stabile erste Winkelposition und von der ersten Winkelposition verschiedene Winkelpositionen besitzt, die durch eine Veränderung des Schwerpunkts des Meßrads (210) hervorgerufen werden, wenn die hydrophilen Mittel (213) feucht sind.

7. Vorrichtung nach Anspruch 6, dadurch gekennzeichnet, daß der wenig hydrophile erste Bereich (214) in Form einer Platte aus leichtem Material gebildet ist, dessen spezifisches Gewicht kleiner als das von Wasser ist, und daß der zweite Bereich (213) ein hydrophiles Element umfaßt, das aus einem schwammartigen Material besteht, das an einem Teil des Umfangs der Platte (214) auf einem Winkelsektor von zwischen ca. 45° und 100°, bezogen auf die Drehachse (19), des Meßrads (210) angebracht ist.

8. Vorrichtung nach Anspruch 6 und Anspruch 7, dadurch gekennzeichnet, daß das schaukelförmige Meßrad je nach Winkelstellung Anzeigen, Markierungen oder Piktogramme (215a, 215b) verdeckt, die an der das Meßrad (210) tragenden Trennwand (106) gebildet sind.

9. Vorrichtung nach einem der Ansprüche 4 bis 8, dadurch gekennzeichnet, daß der zweite Bereich (13; 213) eine andere Farbe als der erste Bereich (14; 214) hat, um die Anzeigemittel für die Winkelposition des Meßrads (10; 210) zu bilden.

10. Vorrichtung nach einem der Ansprüche 1 bis 3, dadurch gekennzeichnet, daß der wenig hydrophile erste Bereich (14) aus einem wasserdichten Rahmen in Form eines Scheibenstücks besteht, das eine Auskleidung aus leichtem Material enthalten kann, so daß die mittlere Dichte des ersten Bereichs (14) kleiner als 1 bleibt.

11. Vorrichtung nach einem der Ansprüche 1 bis 10, dadurch gekennzeichnet, daß der zweite Bereich (3; 13) wenigstens einige Teilchen eines Wasserspeicherelements enthält, deren Volumen in Gegenwart von Wasser stark zunimmt.

12. Vorrichtung nach einem der Ansprüche 1 bis 11, dadurch gekennzeichnet, daß der zweite Bereich (3; 13; 213) in Abwesenheit von Wasser im Reservoir des Behälters wenigstens teilweise in der Nähe des oberen Bereichs des Meßrads (1; 10; 210) und in Gegenwart von Wasser in niedriger Position gehalten wird.

13. Vorrichtung nach einem der Ansprüche 1 bis 12, dadurch gekennzeichnet, daß die Trennwand (6; 106) zum Tragen des Meßrads in ihrem unteren Bereich mit Öffnungen oder Kerben (7) versehen ist, die den Durchtritt von Wasser erlauben.

14. Kulturbehälter, der geeignet ist zur Anwendung einer Vorrichtung zum Bestimmen der für ein Kultursubstrat erforderlichen Wassermenge, dadurch gekennzeichnet, daß er eine Hauptkammer (21) zum Aufnehmen des Kultursubstrats und der zu kultivierenden Pflanzen und eine Nebenkammer (22) umfaßt, die von der Hauptkammer (21) durch eine vertikale Trennwand (6; 106) getrennt ist, deren unterer Bereich den Durchtritt von Wasser erlaubt und die ein Meßrad (1; 10) trägt, das in der Nebenkammer (22) vertikal angeordnet ist und an der vertikalen Trennwand frei um eine horizontale Achse mit einer Unwucht drehbeweglich ist, wobei der untere Bereich des Meßrads (1; 10) in wenigen Millimetern Abstand vom Boden des Reservoirs des Behälters angeordnet ist, wobei das Meßrad einen wenig hydrophilen ersten Bereich (4; 14), dessen mittlere Dichte kleiner ist als 1, und einen zweiten Bereich umfaßt, der mit hydrophilen Mitteln (3; 13) versehen ist, die eine Veränderung der Unwucht des Rades in Abhängigkeit von der in den hydrophilen Mitteln (3; 13) zurückgehaltenen Wasermenge hervorrufen, und das Meßrad (1; 10) oder die Nebenkammer (22) mit Anzeigemitteln (5; 15) für die Winkelposition des Meßrads (1; 10) versehen sind.

15. Kulturbehälter nach Anspruch 14, dadurch gekennzeichnet, daß die vertikale Trennwand (6; 106) abnehmbar ist und mit den Wänden des Behälters gebildeten Rippen (104) zusammenwirkt.

16. Kulturbehälter nach einem der Ansprüche 14 und 15, dadurch gekennzeichnet, daß er aus Plastikmaterial hergestellt ist.
